# EUROPÄISCHE PATENTSCHRIFT

(11) **EP 2 741 161 B1**
(45) Veröffentlichungstag und Bekanntmachung des Hinweises auf die Patenterteilung: **18.03.2020**
(21) Anmeldenummer: 13401133.7
(22) Anmeldetag: 10.12.2013
(51) Int. Cl.: G01C 22/00, G05D 1/02, G01C 21/00

(54) **SELBSTFAHRENDES BODENBEARBEITUNGSGERÄT UND VERFAHREN ZUR POSITIONSBESTIMMUNG BEI EINEM SELBSTFAHRENDEN BODENBEARBEITUNGSGERÄT**
AUTONOMOUS APPARATUS FOR PROCESSING A SURFACE AND METHOD FOR DETECTING THE POSITION OF THE AUTONOMOUS APPARATUS
APPAREIL AUTONOME DE TRAITEMENT DE SURFACE ET PROCÉDÉ DE DÉTECTION DE LA POSITION DE CET APPAREIL

(30) Priorität: 10.12.2012 DE 102012112037
(43) Veröffentlichungstag der Anmeldung: 11.06.2014
(73) Patentinhaber: Miele & Cie. KG, 33332 Gütersloh (DE); Universität Bielefeld, 33615 Bielefeld (DE)
(72) Erfinder: Fleer, David, 33619 Bielefeld (DE); Hillen, Lorenz, 42287 Wuppertal (DE); Horst, Michael, 33613 Bielefeld (DE); Krzykawski, Martin, 32457 Porta Westfalica (DE); Möller, Ralf, 33615 Bielefeld (DE); de Jong, Janina, 33615 Bielefeld (DE)

(56) Entgegenhaltungen:
- WO-A1-2007/051972
- DE-B3-102007 016 802
- US-A1- 2007 090 973

## Beschreibung

Die Erfindung betrifft ein Verfahren zur Positionsbestimmung bei einem selbstfahrenden Bodenbearbeitungsgerät, das eine Antriebseinheit, eine Steuereinrichtung zur Steuerung der Antriebseinheit und mindestens eine Vorrichtung zur Aufnahme von Bildern einer Umgebung des Bodenbearbeitungsgeräts aufweist.

Die Erfindung betrifft weiterhin ein selbstfahrendes Bodenbearbeitungsgerät, das ein derartiges Verfahren zur Positionsbestimmung bei seiner Navigation über den Boden durchführt.

Selbstfahrende Bodenbearbeitungsgeräte dienen der automatisierten Bearbeitung, beispielsweise Reinigung, von Flächen, ohne dass sie von einem Benutzer geschoben oder geführt werden müssen. Zu solchen selbstfahrenden Bodenbearbeitungsgeräten zählen für den Innenbereich beispielsweise selbstfahrende Staubsauger, auch Saugroboter genannt. Weiterhin werden für den Innenbereich selbstfahrende Reinigungsgeräte zum Wischen von Bodenbelägen eingesetzt. Für den Außenbereich sind als selbstfahrende Bodenbearbeitungsgeräte Mähroboter zum Rasenmähen bekannt und, für eine landwirtschaftliche Nutzung, selbstständig arbeitende Landwirtschaftsmaschinen, beispielsweise zum Pflügen, Säen oder Ernten von großen Feldern. Zur Steuerung von selbstständig arbeitenden Landwirtschaftsmaschinen auf entsprechend großen Flächen hat sich eine Navigation der Geräte über die zu bearbeitende Fläche mittels Satelliten, z.B. GPS (Global Positioning System), etabliert. Für Innenanwendungen oder auch Außenanwendungen in einem kleineren, häuslichen Rahmen ist die mit diesem System erzielbare Genauigkeit jedoch nicht ausreichend.

Selbstfahrende Bodenbearbeitungsgeräte für kleinere Flächen weisen üblicherweise einen oder mehrere Sensoren auf, um die Bewegung des Geräts über die zu bearbeitende Fläche zu kontrollieren, beispielsweise um einen Zusammenstoß mit Hindernissen zu vermeiden. Solche Sensoren können beispielsweise Tast- oder Ultraschallsensoren oder auch optische Sensoren sein. Nur in einem Nahbereich arbeitende Sensoren dienen meist der Vermeidung von Zusammenstößen mit Hindernissen, wohingegen Sensoren mit einer größeren Erfassungsreichweite, beispielsweise die eingangs genannte Kamera zur Aufnahme von Umgebungsbildern, auch zur Navigation des Geräts, also zur Planung einer koordinierten Bewegung des Geräts über die zu bearbeitende Fläche, eingesetzt werden. Bei der koordinierten Bewegung soll beispielsweise sichergestellt werden, dass die gesamte Fläche bearbeitet wird, ohne dass Bereiche der Fläche mehrfach überfahren werden.

Aus der Druckschrift DE 10 2007 016 802 B3 ist ein Navigationsverfahren für ein selbstfahrendes Bodenbearbeitungsgerät bekannt, bei dem das Bodenbearbeitungsgerät eine vorgegebene Bahnkurve im Raum durch entsprechende Ansteuerung seiner Antriebseinheit abfährt, wobei das Bodenbearbeitungsgerät der Bahnkurve in kleinen Abschnitten durch ein odometrisches Verfahren folgt, also durch ein Verfahren, bei dem die (vermutlich) gefahrene Strecke durch Auswertung der Drehbewegung der einzelnen Räder des Bodenbearbeitungsgeräts ermittelt wird. Durch Radschlupf, insbesondere auf Teppichen oder hervorgerufen durch Bodenunebenheiten im Innenbereich oder durch schlammigen oder sandigen Untergrund im Außenbereich, weicht die tatsächliche Position des Bodenbearbeitungsgeräts mit der Zeit zunehmend von der odometrisch bestimmten ab. Bei der genannten Druckschrift wird dieses dadurch korrigiert, dass eine Kamera in regelmäßigen Zeitabständen Bilder der Umgebung des Bodenbearbeitungsgeräts aufnimmt und abspeichert. Ein aktuell aufgenommenes Bild wird dann mit mindestens zwei zuvor aufgenommenen Bildern verglichen, z.B. mit zwei Bildern, die auf der zuletzt gefahrenen geraden Reihe aufgenommen wurden. Aus dem Vergleich der Bilder wird die Position des Bodenbearbeitungsgeräts zum Aufnahmezeitpunkt des aktuellen Bildes über trigonometrische Verfahren relativ zu den Positionen des Bodenbearbeitungsgeräts zum Aufnahmezeitpunkt der gespeicherten Bilder bestimmt. Insbesondere wird ein Abstand zu den vorherigen Positionen ermittelt, welcher dann dazu verwendet wird, um eine zu einer ersten Reihe möglichst parallele zweite Reihe abzufahren, so dass ein mäander- oder spiralförmiges Befahren eines Raumbereichs möglich ist.

Nachteilig bei dem Verfahren ist jedoch, dass zwar ein paralleles Abfahren von Bahnteilstücken erreicht wird, jedoch keine absoluten Positionsdaten bei der Navigation des Bodenbearbeitungsgeräts bereitstehen. Eine Korrektur erfolgt jeweils mithilfe von zuvor aufgenommenen Bildern, wobei deren absolute Position ebenfalls nicht bekannt ist. Somit summieren sich im Laufe des Verfahrens Fehler in zunehmender, aber nicht bekannter Größe auf. Mit fortschreitendem Verfahren steigt somit die Ungenauigkeit in der Positionsbestimmung, ohne dass eine Abschätzung der Größe dieser Ungenauigkeit möglich ist. Eine Kenntnis der Ungenauigkeit bei der Navigation kann jedoch vorteilhaft sein, beispielsweise um bei zu großer Ungenauigkeit in der Positionsbestimmung alternative Positionsbestimmungsverfahren ausführen zu können, die im normalen Betrieb aber, z.B. aus Effizienzgründen, möglichst selten verwendet werden sollten.

Des Weiteren können bei einem Abfahren einer mäanderförmigen Bahn bei dem genannten bekannten Verfahren Abweichungen von einer idealen geraden Reihe auf einem vorhergehenden Bahnabschnitt zu Abweichungen auf dem folgenden Bahnabschnitt führen, da nur der Abstand zur Vorgängerreihe, aber keine vollständige Positionsschätzung bestimmt wird. Zudem ist eine Erweiterung auf mehrere aneinandergrenzende Bereiche, die jeweils mäanderförmig gereinigt werden, ohne eine vollständige Positionsschätzung nur schwer möglich.

Ein weiteres Navigationsverfahren für ein selbstfahrendes Bodenbearbeitungsgerät wird in der Druckschrift US 2007/0090973 A1 beschrieben. Auch bei diesem Verfahren werden Umgebungsbilder aufgenommen und analysiert, um eine Position des Bodenbearbeitungsgeräts im Raum zu ermitteln oder zu korrigieren. Dazu werden die Bilder unmittelbar nach ihrer Aufnahme auf charakteristische Merkmale der Umgebung hin untersucht, beispielsweise Raumecken oder Möbelkanten und -ecken. Identifizierte Merkmale werden als Landmarken bezeichnet und mitsamt ihrer stereoskopisch bestimmten Position im Raum gespeichert. Im weiteren Verlauf einer Fahrt wird versucht, diese Landmarken in nachfolgend aufgenommenen Bildern ebenfalls zu identifizieren. Kann eine Landmarke erneut aufgefunden werden, kann aus der dann ermittelten Richtung, unter der die Landmarke im nachfolgenden Bild erscheint, auf die Position des Bodenbearbeitungsgeräts bei der Aufnahme des nachfolgenden Bildes geschlossen werden.

Auch die Druckschrift WO 2007/051972 A1 offenbart ein solch landmarkenbasiertes Navigationsverfahren für selbstfahrenden Bodenbearbeitungsgeräte.

Hierbei kann es sich als problematisch erweisen, dass bei Aufnahme eines Bildes bereits eine Auswahl getroffen werden muss, welches Bildmuster eine Landmarke darstellt und wie viele solcher Landmarken identifiziert und gespeichert werden sollen. Dabei stellt sich unter Umständen erst im Nachhinein, nämlich bei einem Wiedersuchen der Landmarken in nachfolgenden Bildern, heraus, ob ausreichend viele geeignete Landmarken zur Positionsbestimmung oder-korrektur bereitstehen. Zudem wird eine Landmarke mit ihrer absoluten Position im Raum gespeichert. Ein Fehler bzw. eine Ungenauigkeit bei der Bestimmung der Landmarkenposition beim ersten Identifizieren der Landmarke beeinflusst damit alle nachfolgenden Positionsbestimmungen bzw. -korrekturen.

Es ist eine Aufgabe der vorliegenden Erfindung, ein Verfahren zur Positionsbestimmung bei einem selbstfahrenden Bodenbearbeitungsgerät der eingangs genannten Art zu schaffen, bei dem jederzeit zum einen absolute Positionsdaten für das Gerät, und zum anderen auch ein Maß für die Unsicherheit, mit der diese Positionsdaten behaftet sind, vorliegen. Weiterhin soll das Verfahren dynamisch dahingehend sein, dass im Laufe des Verfahrens ermittelte Informationen und getroffene Entscheidungen möglichst keine nachteiligen und unkorrigierbaren Implikationen für nachfolgende Verfahrensschritte haben.

Erfindungsgemäß wird dieses Problem durch ein Verfahren und ein Bodenbearbeitungsgerät mit den Merkmalen des Patentanspruchs 1 bzw. 15 gelöst.

Bei einem erfindungsgemäßen Verfahren zur Positionsbestimmung bei einem selbstfahrenden Bodenbearbeitungsgerät, das eine Antriebseinheit, eine Steuereinrichtung zur Steuerung der Antriebseinheit und eine Vorrichtung zur Aufnahme von Bildern einer Umgebung des Bodenbearbeitungsgeräts aufweist, wird eine aktuelle Position des Bodenbearbeitungsgeräts in Form einer Verteilung von Aufenthaltswahrscheinlichkeiten nachgehalten. Das Verfahren weist die folgenden Schritte auf: Es wird eine aktuelle Position des Bodenbearbeitungsgeräts durch Weiterentwicklung einer eine vorherige Position des Bodenbearbeitungsgeräts beschreibenden Verteilung der Aufenthaltswahrscheinlichkeiten vorhergesagt. Weiter wird ein aktuelles Umgebungsbild aufgenommen. Das aktuelle Umgebungsbild wird mit zumindest einem gespeicherten Umgebungsbild, das an einer vorherigen Position des Bodenbearbeitungsgeräts aufgenommen wurde, verglichen. Die die aktuelle Position beschreibende Verteilung der Aufenthaltswahrscheinlichkeiten wird dann anhand eines Ergebnisses des Vergleichs des aktuellen Umgebungsbildes mit dem zumindest einen Umgebungsbild korrigiert, und es werden die korrigierte Verteilung der Aufenthaltswahrscheinlichkeiten sowie das aktuelle Umgebungsbild gespeichert.

Durch die Weiterentwicklung und Korrektur der Verteilung von Aufenthaltswahrscheinlichkeiten liefert das Verfahren zu jeder Zeit eine (relativ zur Startposition) absolute Position des Geräts, einschließlich Informationen über die Genauigkeit, mit der die Position angegeben werden kann. Der Vergleich mit Bildern, denen jeweils auch absolute Positionsangaben zugeordnet sind, verringert insgesamt die Unsicherheiten in der Positionsbestimmung. Auf Basis dieser Informationen kann eine systematische Abfahrt eines Bodenbereichs geplant und durchgeführt werden. Gegenüber einer bei einem Bildvergleich nur relativ geschätzten Position (z.B. nur Bestimmung des Abstands zur Vorgängerbahn) werden durch Fehlerfortpflanzung hervorgerufene systematische Fehler verringert. Die bei der Fahrt ständig vorliegende Positionsinformation ermöglicht zudem das inkrementelle Anlegen einer Karte des abgefahrenen Bereichs. Da die Bilder selbst und nicht aus den Bildern extrahierte Informationen wie Landmarken gespeichert werden, steht in nachfolgenden Schritten der volle Informationsgehalt, der an einer vorherigen Position bei der Aufnahme des Bildes vorlag, zur Verfügung. Der Vergleich des aktuellen Umgebungsbildes mit dem zumindest einem gespeicherten Umgebungsbild kann so auf Bildinformationen zurückgreifen, die in einem Landmarken-basierten Verfahren unter Umständen zum Zeitpunkt der Aufnahme des gespeicherten Bildes nicht als relevant identifiziert und damit nicht extrahiert und gespeichert worden wären.

In einer vorteilhaften Ausgestaltung des Verfahrens umfasst die Position neben einer Ortsinformation auch eine Orientierungsinformation. Auf diese Weise kann neben dem Ort, beispielsweise angegeben in kartesischen Koordinaten, auch die Orientierung (Ausrichtung) des Bodenbearbeitungsgeräts, beispielsweise angegeben im Bezug auf eine Achse in dem Koordinatensystem der Ortsinformation, ständig und mit einer Genauigkeitsangabe versehen geschätzt werden.

In einer weiteren vorteilhaften Ausgestaltung des Verfahrens wird die Verteilung der Aufenthaltswahrscheinlichkeiten durch eine Partikelwolke angegeben, die eine Mehrzahl von möglichen Zuständen des Bodenbearbeitungsgeräts umfasst, von denen jeder eine Ortsinformation, eine Orientierungsinformation und eine Wahrscheinlichkeitsinformation enthält. Gegenüber anderen möglichen Repräsentationen der Verteilung der Aufenthaltswahrscheinlichkeiten, beispielsweise einer multivariaten Gaußverteilung, bietet eine Partikelwolke den Vorteil, dass beliebige Verteilungen modelliert werden können. Die Ausbreitung der Partikelwolke spiegelt die Unsicherheit bei der Positionsbestimmung wider.

In einer weiteren vorteilhaften Ausgestaltung des Verfahrens beruht die Weiterentwicklung einer eine vorherige Position des Bodenbearbeitungsgeräts beschreibenden Verteilung der Aufenthaltswahrscheinlichkeiten auf einem odometrischen Verfahren. Besonders bevorzugt werden dabei Fahrinformationen des Geräts, die von Sensoren bereitgestellt werden, verwendet. Ein solches odometrisches Verfahren kann mit geringem sensorischen und rechnerischen Aufwand durchgeführt werden. Letztlich beruht die Positionsbestimmung damit auf einer Kombination von Fahrinformationen und Bildvergleichen (optische Informationen), also auf Informationen, die auf unterschiedliche Art ermittelt werden, wodurch die Güte und Zuverlässigkeit der Positionsbestimmung erhöht werden.

In einer weiteren vorteilhaften Ausgestaltung des Verfahrens wird das aktuelle Umgebungsbild mit einem oder mehreren gespeicherten Umgebungsbildern verglichen, wobei Richtungsvektoren bestimmt werden, die eine Richtung angeben, unter der die aktuelle Position, an der das aktuelle Umgebungsbild aufgenommen wurde, von der jeweiligen Position, an der das entsprechende gespeicherte Umgebungsbild aufgenommen wurde, aus betrachtet erscheint. Bevorzugt werden dabei auch Orientierungsdifferenzen bestimmt, die einen Unterschied zwischen einer aktuellen Orientierung des Bodenbearbeitungsgeräts und dessen Orientierung zum Zeitpunkt der Aufnahme eines gespeicherten Umgebungsbilds angeben. Richtungsvektoren und Orientierungsdifferenzen können mit relativ geringem Rechenaufwand und mit großer Genauigkeit aus den Bildvergleichen ermittelt werden.

Mithilfe von trigonometrischen Methoden kann dann anhand von den Richtungsvektoren und Orientierungsdifferenzen, gewonnen aus dem Vergleich des aktuellen Umgebungsbildes mit den gespeicherten Umgebungsbildern, eine Korrektur der Verteilung der Aufenthaltswahrscheinlichkeiten erfolgen.

Weitere vorteilhafte Ausgestaltungen und Weiterbildungen der Erfindung ergeben sich aus den Unteransprüchen.

Ein erfindungsgemäßes selbstfahrendes Bodenbearbeitungsgerät weist eine Antriebseinheit, eine Steuereinrichtung zur Steuerung der Antriebseinheit und eine Vorrichtung zur Aufnahme von Bildern einer Umgebung des Bodenbearbeitungsgeräts auf und zeichnet sich dadurch aus, dass es zur Durchführung eines zuvor beschriebenen Verfahrens zur Positionsbestimmung eingerichtet ist. Es ergeben sich die im Zusammenhang mit dem Verfahren genannten Vorteile.

Die Erfindung wird nachfolgend anhand von drei Figuren näher erläutert. Die Figuren zeigen:
- Figur 1: eine schematische Darstellung eines Bodenbearbeitungsgeräts zur Durchführung des erfindungsgemäßen Verfahrens;
- Figur 2: eine schematische Darstellung eines Teils einer von dem Bodenbearbeitungsgerät abgefahrenen Bahnkurve und
- Figur 3: einen Abschnitt einer Bahnkurve, die ein simuliertes Bodenbearbeitungsgerät bei Durchführung des erfindungsgemäßen Verfahrens ausführt.

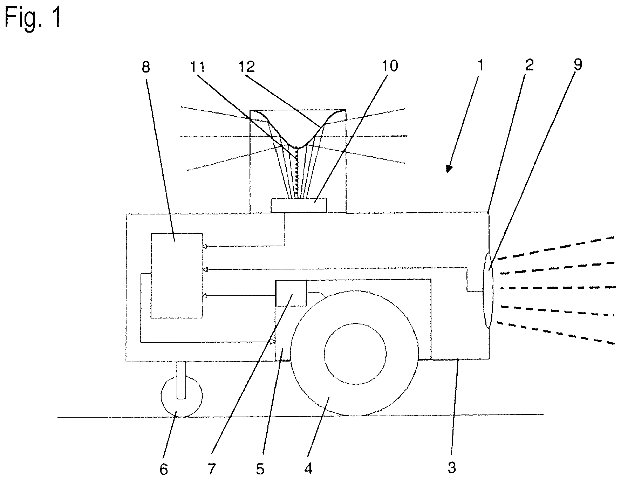

Figur 1 zeigt ein selbstfahrendes Bodenbearbeitungsgerät 1 in einer schematischen Darstellung. Es sind lediglich die für die Bewegung des Bodenbearbeitungsgeräts 1 und für die Positionsbestimmung und damit Navigation notwendigen Komponenten dargestellt. Die zur Bodenbearbeitung benötigten Werkzeuge, beispielsweise Saug- und/oder Bürsteinrichtungen, Schneidmesser usw. sind zur Durchführung des erfindungsgemäßen Verfahrens nicht relevant und deshalb hier nicht dargestellt oder beschrieben.

Das Bodenbearbeitungsgerät 1, nachfolgend der einfacheren Darstellung halber auch Gerät 1 genannt, weist im Bereich einer Bodenplatte 3 eines Gehäuses 2 angeordnete Antriebsräder 4 auf. Es sind zwei dieser Antriebsräder 4 vorgesehen, die unabhängig voneinander von jeweils einem Antriebsmotor 5 gedreht werden können. Zudem ist als Teil des Fahrwerks ein Stützrad 6 vorhanden. Die beiden Antriebsräder 4 können bezüglich ihrer Drehzahl und auch Drehrichtung unabhängig voneinander angetrieben werden, was auch als differentielle Lenkung bezeichnet wird. Für jedes dieser Antriebsräder ist ein Sensor 7 vorgesehen, der die Drehbewegung des jeweiligen Antriebsrads 4 erfasst. Der Sensor 7 kann beispielsweise ein optischer Drehimpulsgeber sein.

Weiter ist eine Steuereinrichtung 8 vorhanden, die mit den Antriebsmotoren 5 in Verbindung steht und diese ansteuert. Die Steuereinrichtung 8 weist weiterhin Steuereingänge auf, mit denen sie mit den Sensoren 7 verbunden ist. Weiterhin sind einer oder mehrere Abstandssensoren 9 vorhanden, die am Umfang des Geräts 1 und/oder im Bereich der Bodenplatte 2 angeordnet sind und die ebenfalls mit der Steuereinrichtung 8 verbunden sind. Mithilfe der Abstandssensoren 9, von denen in der Figur 1 beispielhaft nur ein einziger im vorderen Bereich des Geräts 1 dargestellt ist, können Hindernisse erkannt und Zusammenstöße mit den Hindernissen verhindert werden. Als Abstandssensoren 9 können optisch, akustisch oder über eine Tastfunktion arbeitende Sensoren eingesetzt werden.

Weiterhin ist bei dem Bodenbearbeitungsgerät 1 eine Kamera 10 als Vorrichtung zur Aufnahme eines Umgebungsbildes vorgesehen, beispielsweise ein CCD (Charge-Coupled Device)-Chip mit geeigneter räumlicher und zeitlicher Auflösung. Auf der nach oben gerichteten optischen Achse 11 der Kamera 10 ist ein hyperbolischer Spiegel 12 angeordnet. Auf diese Weise kann ein 360°-Panoramabild von der Umgebung des Roboters 1 mit einer Kameraaufnahme erfasst und zur weiteren Auswertung an den Steuerrechner 8 weitergegeben werden. Es wird angemerkt, dass anstelle des dargestellten hyperbolischen Spiegels 12 andere Vorrichtungen zur Aufnahme einer möglichst weitwinkligen Aufnahme der Umgebung des Geräts 1 verwendet werden können. Beispielsweise können eine oder mehrere mit Weitwinkel- oder Fisheye-Objektiven versehene Kameras eingesetzt werden. Auch eine drehbare Kamera ist denkbar, ebenso wie eine Laser-Scaneinheit, die beispielsweise mithilfe eines rotierenden Spiegels ein weitwinkliges oder 360°-Panoramabild der Umgebung erfasst.

Im Folgenden wird ein erfindungsgemäßes Verfahren zur Positionsbestimmung beschrieben, das beispielsweise von dem in Figur 1 dargestellten Bodenbearbeitungsgerät 1 durchgeführt werden kann. Das Verfahren wird daher nachfolgend beispielhaft an dem Bodenbearbeitungsgerät 1 der Figur 1 erläutert.

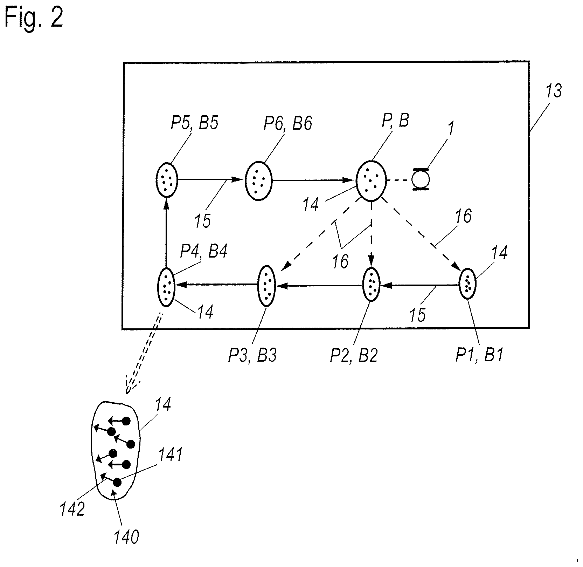

In Figur 2 ist eine Draufsicht auf einen von Wänden begrenzten, hier beispielhaft rechteckigen Raum 13 gezeigt. Das Gerät 1 befindet sich dabei etwa in der Mitte des Raums 13, wobei seine aktuelle Position P durch eine Partikelwolke 14 beschrieben ist. Gestartet ist das Gerät 1 an einer ebenfalls durch eine Partikelwolke 14 angegebenen Startposition P1. Der Weg, den das Gerät 1 von der Startposition P1 genommen hat, ist durch Bewegungspfeile 15 in der Figur 2 symbolisiert.

In regelmäßigen Zeitabständen sind bei der Bewegung des Geräts 1 von der Startposition P1 Partikelwolken 14, die die zu dem Zeitpunkt jeweils aktuelle Position des Geräts 1 wiedergeben, gespeichert worden. Diese gespeicherten Positionen sind als Positionen P2 bis P6 in der Figur eingetragen.

Beispielhaft ist in der Figur 2 die Partikelwolke 14 an der Position P4 vergrößert dargestellt. In der Vergrößerung ist zu erkennen, dass die Partikelwolke 14 aus einer Mehrzahl von Partikeln 140 gebildet ist. Die Partikel 140 stellen mögliche Positionszustände des Geräts 1 dar. Jeder der Partikel enthält zur Positionsangabe eine Ortsinformation 141, beispielsweise in Form von Koordinaten x und y, eine Orientierungsinformation 142, beispielsweise in Form einer Richtung θ, und eine Wahrscheinlichkeitsinformation w. Ein Partikel 140 gibt an, dass sich zum entsprechenden Zeitpunkt das Gerät 1 mit einer Wahrscheinlichkeit w am Ort (x, y) befunden hat und in die Richtung θ gedreht war. Aus der Menge aller Partikel 140 einer Partikelwolke ergibt sich als gewichteter Schwerpunkt der Koordinaten x und y der wahrscheinlichste tatsächliche Aufenthaltsort des Geräts 1, aus dem gewichteten Schwerpunkt der Orientierungsinformationen θ die wahrscheinlichste Ausrichtung des Geräts 1. Die Koordinaten x, y sind dabei beispielhaft kartesische Koordinaten, mit denen eine Ortsangabe in dem zweidimensionalen Raum 13 erfolgt. Die Richtungsangabe bezieht sich auf eine der Raumrichtungen, beispielsweise kann eine Orientierung von θ=0 einer Ausrichtung in Richtung der x-Achse in dem genannten Koordinatensystem entsprechen. Bei einer Bewegung mit gleichermaßen schnell drehenden Antriebsrädern würde ein Gerät 1 mit der Orientierung von θ=0 dann genau in Richtung der x-Achse fahren. Selbstverständlich ist eine Darstellung in anderen Koordinaten, beispielsweise Winkelkoordinaten für die Positionsangabe, möglich.

Es wird davon ausgegangen, dass beim Start von der Startposition P1 sowohl die Position als auch die Ausrichtung des Geräts 1 bekannt sind, beispielsweise weil die Startposition P1 die Position der Ladestation des Geräts 1 ist, die als Koordinatenursprung definiert ist. Entsprechend sind sowohl die Positionskoordinaten x, y, die Orientierungsinformation θ und die Wahrscheinlichkeitsinformation w aller Partikel 140 der Partikelwolke 14 an der Startposition P1 gleich und auf einen Anfangswert gesetzt. An der Startposition P1 wird nun zunächst ein erstes Umgebungsbild B1 aufgenommen und gespeichert. Weiterhin wird die Startposition P1 in Form der Partikelwolke 14 gespeichert. Die Startposition P1 und das Bild B1 sind dabei einander zugeordnet.

Nach dem Losfahren des Geräts 1 in die Richtung θ wird dann eine aktuelle Position des Geräts 1 parallel zur Bewegung des Geräts in Echtzeit vorhergesagt, indem die Partikelwolke 14 anhand von Fahrinformationen der Sensoren 7 odometrisch weiterentwickelt wird. Hierzu können beispielsweise die bekannten Odometrie-Beziehungen von R. Siegwart und I.R. Nourbakhsh aus dem Buch "Introduction to Autonomous Mobile Robots", MIT Press, 2004 verwendet werden, wobei Annahmen über die Unsicherheiten der Fahrinformationen vorgegeben werden. Durch den Odometrieschritt wird die Unsicherheit in der Positionsbestimmung größer, was sich in einer weiter ausgedehnten Partikelwolke niederschlägt. Die Bestimmung der Position durch die mit Positionsunsicherheiten behaftete Partikelwolke 14 wird daher nachfolgend auch als Positionsschätzung bezeichnet.

Nach einer vorgegebenen Zeit oder nach einer vorgegebenen Wegstrecke wird an einer Position P2 ein weiteres Bild B2 aufgenommen und dieses Bild B2 zusammen mit der aktuell vorliegenden Partikelwolke 14 an dieser Position P2 gespeichert. Die Entwicklung der Partikelwolke 14 erfolgt in diskreten Schritten, wobei zwischen zwei der dargestellten Positionen P1 bis P6, an denen jeweils die Partikelwolke 14 gespeichert wird und ein Bild aufgenommen wird, eine Mehrzahl, beispielsweise 10, Entwicklungsschritte der Partikelwolke 14 liegen können.

Das Verfahren wird mit unveränderter Fahrtrichtung fortgesetzt, bis ein Hindernis vor dem Gerät 1 detektiert wird, beispielsweise über den Abstandssensor 9. Im dargestellten Beispiel ist dieses bei der Position P4 nach dem Abfahren eines ersten, im Wesentlichen geraden Bahnabschnitts der Fall. Dieser erste Bahnabschnitt wird nachfolgend auch als erste Reihe bezeichnet. Vorteilhafterweise kann die erste Reihe entlang einer Wand des Raums 13 verlaufen. In dem Fall können durch seitliche Abstandssensoren 9 bestimme Abstände zur Wand verwendet werden, um eine möglichst gerade erste Reihe zu erhalten. Dabei wird die odometrisch gewonnene Positionsschätzung mithilfe der Abstandssensoren 9 korrigiert. In einer alternativen Ausgestaltung kann auch beim Befahren der ersten Reihe eine Korrektur der Positionsbestimmung nach dem unten beschriebenen Verfahren erfolgen, wobei zuvor in der ersten Reihe aufgenommene Bilder herangezogen werden.

Es erfolgt dann eine Drehung des Geräts 1 um 90°, hier im Uhrzeigersinn, gefolgt von einer Bewegung um wiederum eine vorgegebene Distanz, die sich beispielsweise an der Breite des Reinigungswerkzeugs orientiert. Während dieses Bahnabschnitts wird wiederum die Partikelwolke 14 weiterentwickelt. Nach einer anschließenden weiteren Drehung um 90° im Uhrzeigersinn wird die Partikelwolke 14 an der dann erreichten Position P5 zusammen mit einem dort aufgenommenen weiteren Bild P5 gespeichert. Das Gerät 1 steht damit am Anfang eines weiteren Bahnabschnitts, von dem in der Figur 2 die Position P6 dargestellt ist.

Die erste Reihe mit den Positionen P1 bis P4 dient der Aufnahme von ersten Umgebungsbildern B1 bis B4 an den Positionen P1 bis P4, die nur mittels odometrischer Methoden bestimmt werden. Das erfindungsgemäße Verfahren, bei dem odometrische Verfahren mit Korrekturen anhand von Bildvergleichen verknüpft sind, kann bei der weiteren Bewegung des Geräts 1 mithilfe der Bilder B1 bis B4 (und weiterer, im Laufe des Verfahrens aufgenommener Bilder) ausgeführt werden.

Bei dem erfindungsgemäßen Verfahren wird nach Aufnahme eines aktuellen Bildes B an der Position P dieses aktuelle Bild B mit einem oder mehreren zuvor aufgenommenen Bildern verglichen, in der Figur 2 mit den drei Bildern B1 bis B3. Aus dem Bildervergleich kann mit bekannten Verfahren (vgl. beispielsweise die eingangs erwähnte Druckschrift DE 10 2007 016 802 B3), die als "lokales visuelles Homing" bezeichnet werden, die Richtung bestimmt werden, unter der die aktuelle Position P jeweils von den Positionen P1 bis P3 aus erscheint, und ebenso die Differenz in der Azimutorientierung, in der die Bilder aufgenommen wurden. Die Differenzen in der Azimutorientierung werden nachfolgend auch als Orientierungsdifferenzen bezeichnet. Diese Richtungen sind als Richtungsvektoren 16 in der Figur eingezeichnet.

Anhand der Richtungsvektoren 16 und der Orientierungsdifferenzen kann nun die Positionsschätzung in Form der Partikelwolke 14 korrigiert werden. Dabei wird für jedes Partikel 140 der Partikelwolke 14 ermittelt, wie gut dessen Ort 141 und Orientierung 142 zu den Richtungsvektoren 16 und den Orientierungsdifferenzen sowie den Partikelwolken 14 an den Positionen P1 bis P3 passen. Dazu wird jeweils ein erwarteter Richtungsvektor (bzw. eine erwartete Orientierungsdifferenz) mit dem gemessenen Richtungsvektor 16 (bzw. der gemessenen Orientierungsdifferenz) verglichen. Vorteilhafterweise erfolgt eine Korrektur dabei nicht durch Korrektur der Ortsinformationen x, y und der Orientierungsinformation θ der Partikel 140 der Partikelwolke 14, sondern durch eine Neuberechnung der Wahrscheinlichkeitsinformationen w der Partikel 140: Je besser die Position eines Partikels 140 zu den gemessenen Richtungsvektoren 16 und den Orientierungsdifferenzen passt, umso größer ist die Wahrscheinlichkeit w dieses Partikels 140. Umgekehrt wird die Wahrscheinlichkeit w eines Partikels 140 nach der Neuberechnung klein sein, wenn die Position dieses Partikels 140 zu einer schlechten Passung führt.

Auch die Bestimmung der Richtungsvektoren und Orientierungsdifferenzen ist mit einer Unsicherheit behaftet, einerseits aufgrund der Unsicherheit in den Positionen P2 und P3, andererseits aufgrund von Ungenauigkeiten bei dem Verfahren des lokalen visuellen Homings. Die Größe der Unsicherheit bei der Bestimmung der Richtungsvektoren und Orientierungsdifferenzen kann im Schritt des Korrigierens der Wahrscheinlichkeiten w der Partikel 140 berücksichtigt werden. Nach der Bestimmung der Wahrscheinlichkeiten w aller Partikel 140 werden Partikel 140 mit geringer Wahrscheinlichkeit w aus der Partikelwolke 14 entfernt und dafür Partikel 140 mit höherer Wahrscheinlichkeit w vervielfacht. Durch diesen Schritt verringert sich die Ausdehnung der Partikelwolke 14 und damit die Unsicherheit der Positionsschätzung.

Nach dem Korrigieren der Partikelwolke 14 wird diese als Position P7 zusammen mit dem aktuellen Bild B (als Bild B7) gespeichert, um für nachfolgende Bildvergleiche und Korrekturschritte verfügbar zu sein. Zwischen der Aufnahme des aktuellen Bildes B und der Auswertung des Bildvergleichs und dem erfolgten Korrekturschritt vergeht eine gewisse Zeit, in der das Gerät 1 bereits eine Wegstrecke zurückgelegt hat. Die Korrektur wird auf die zum Zeitpunkt der Bildaufnahme aktuelle Partikelwolke 14 angewendet. Diese ist in der vergangenen Zeit jedoch unter Umständen bereits odometrisch weiterentwickelt worden. Es ist in einem solchen Fall vorteilhaft, die Weiterentwickelung der Partikelwolke 14 ab der dann korrigierten Position neu zu berechnen und so verzögert zu korrigieren.

Das beschriebene Verfahren liefert mit der aktuellen Partikelwolke zu jeder Zeit eine (relativ zur Startposition) absolute Position (Ort und Orientierung) des Geräts 1 einschließlich Information über die Genauigkeit, mit der Ort und Orientierung angegeben werden können.

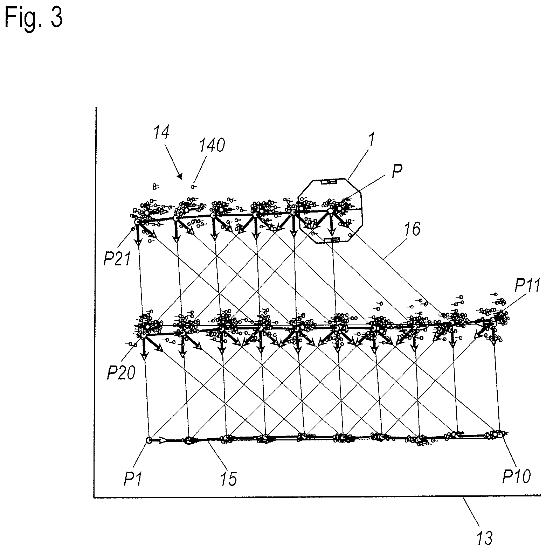

Figur 3 zeigt in ähnlicher Darstellung wie Figur 2 eine simulierte Bewegung eines Bodenbearbeitungsgeräts 1 bei Anwendung des anmeldungsgemäßen Verfahrens zur Positionsbestimmung. Das Gerät 1 ist dabei links unten in dem dargestellten Raum 13 gestartet und hat sich auf der dargestellten mäanderförmigen Bahn bewegt. Die Positionen P1 bis P10 werden entweder nur durch odometrische Verfahren oder zusätzlich mithilfe einer Korrektur anhand zuvor auf demselben Bahnabschnitt aufgenommener Bilder oder anhand von Abstandsmessungen zu einem geraden Wandabschnitt bestimmt, die folgenden Positionen ab P11 durch odometrische Verfahren, korrigiert mithilfe von hier ebenfalls simulierten Bildvergleichen (lokales visuelles Homing).

Bei dem dargestellten Verfahren stellt die Partikelwolke eine Verteilung für die Aufenthaltswahrscheinlichkeiten des Geräts dar, die durch einen sogenannten Partikelfilter aktualisiert wird. In alternativen Ausgestaltungen des Verfahrens kann eine andere Verteilung für die Aufenthaltswahrscheinlichkeiten Grundlage für die Positionsschätzung bilden. Beispielsweise kann anstelle des Partikelfilters ein sogenannter Kalmanfilter eingesetzt werden, bei dem die Positionsunsicherheit durch eine oder mehrere multivariate Gaußverteilung beschrieben wird. Allgemein werden derartige Verfahren auch als Bayesfilter bezeichnet.

## Patentansprüche

1. Verfahren zur Positionsbestimmung bei einem selbstfahrenden Bodenbearbeitungsgerät (1), das eine Antriebseinheit (5), eine Steuereinrichtung (8) zur Steuerung der Antriebseinheit (5) und eine Vorrichtung zur Aufnahme von Bildern einer Umgebung des Bodenbearbeitungsgeräts (1) aufweist, wobei eine aktuelle Position (P) des Bodenbearbeitungsgeräts (1) in Form einer Verteilung von Aufenthaltswahrscheinlichkeiten nachgehalten wird, mit den folgenden Schritten:
- Vorhersagen einer aktuellen Position (P) des Bodenbearbeitungsgeräts (1) durch Weiterentwicklung einer eine vorherige Position (P1-P6) des Bodenbearbeitungsgeräts (1) beschreibenden Verteilung der Aufenthaltswahrscheinlichkeiten;
- Aufnehmen eines aktuellen Umgebungsbildes (B);
**gekennzeichnet durch** die weiteren Schritte:
- Vergleichen des aktuellen Umgebungsbildes (B) mit zumindest einem gespeicherten Umgebungsbild (B1-B3), das an einer vorherigen Position (P1-P3) des Bodenbearbeitungsgeräts (1) aufgenommen wurde;
- Korrigieren der die aktuelle Position (P) beschreibenden Verteilung der Aufenthaltswahrscheinlichkeiten anhand eines Ergebnisses des Vergleichs des aktuellen Umgebungsbildes (B) mit dem zumindest einen gespeicherten Umgebungsbild (B1-B3) und
- Speichern der korrigierten Verteilung der Aufenthaltswahrscheinlichkeiten sowie des aktuellen Umgebungsbildes (B).

2. Verfahren nach Anspruch 1, bei dem die Position (P) des Bodenbearbeitungsgeräts (1) neben einer Ortsinformation (x, y) eine Orientierungsinformation (θ) umfasst.

3. Verfahren nach Anspruch 2, bei dem die Verteilung der Aufenthaltswahrscheinlichkeiten durch eine Partikelwolke (14) angegeben wird, die eine Mehrzahl von möglichen Zuständen (140) des Bodenbearbeitungsgeräts (1) umfasst, von denen jeder eine Positionsinformation, die eine Ortsinformation (x, y) und eine Orientierungsinformation (θ) umfasst, und eine Wahrscheinlichkeitsinformation (w) enthält.

4. Verfahren nach einem der Ansprüche 1 bis 3, bei dem die Weiterentwicklung einer eine vorherige Position (P1-P6) des Bodenbearbeitungsgeräts (1) beschreibenden Verteilung der Aufenthaltswahrscheinlichkeiten auf einem odometrischen Verfahren beruht.

5. Verfahren nach Anspruch 4, bei dem das odometrische Verfahren Fahrinformationen des Geräts (1), die von Sensoren (7) bereitgestellt werden, verwendet.

6. Verfahren nach einem der Ansprüche 1 bis 5, bei dem das aktuelle Umgebungsbild (B) mit einem oder mehreren gespeicherten Umgebungsbildern (B1-B3) verglichen wird, wobei Richtungsvektoren (16) bestimmt werden, die eine Richtung angeben, unter der die aktuelle Position (P), an der das aktuelle Umgebungsbild (B) aufgenommen wurde, von der jeweiligen Position (P1-P3), an der das entsprechende gespeicherte Umgebungsbild (B1-B3) aufgenommen wurde, aus betrachtet erscheint.

7. Verfahren nach Anspruch 6, bei dem zusätzlich durch den Bildvergleich eine oder mehrere Orientierungsdifferenzen bestimmt werden, die einen Unterschied zwischen einer aktuellen Orientierung des Bodenbearbeitungsgeräts (1) und dessen Orientierung zum Zeitpunkt der Aufnahme eines gespeicherten Umgebungsbilds (B1-B3) angeben.

8. Verfahren nach Anspruch 6 oder 7, bei dem anhand der Richtungsvektoren (16) und/oder der Orientierungsdifferenzen die Wahrscheinlichkeitsinformationen (w) für die Partikel (140) der Partikelwolke (14) neu berechnet werden.

9. Verfahren nach Anspruch 8, bei dem nach dem Schritt des Neuberechnens der Wahrscheinlichkeitsinformationen (w) Partikel 140 mit einem geringen Wert der Wahrscheinlichkeitsinformation (w) aus der Partikelwolke 14 entfernt und dafür Partikel 140 mit höherem Wert der Wahrscheinlichkeitsinformation (w) vervielfacht werden.

10. Verfahren nach einem der Ansprüche 1 bis 9, bei dem der Vorhersageschritt mehrfach ausgeführt wird, bevor ein aktuelles Umgebungsbild (B) aufgenommen wird.

11. Verfahren nach einem der Ansprüche 1 bis 10, bei dem die angegebenen Schritte wiederholt während einer Bewegung des Geräts (1) ausgeführt werden.

12. Verfahren nach Anspruch 10 und 11, bei dem Vorhersageschritte bereits wiederholt ausgeführt werden, während die Schritte des Aufnehmens des aktuellen Umgebungsbildes (B), des Vergleichens und des Korrigierens noch ausgeführt werden.

13. Verfahren nach Anspruch 12, bei dem bereits ausgeführte Weiterentwicklungen der eine vorherige Position (P1-P6) des Bodenbearbeitungsgeräts (1) beschreibenden Partikelwolke (14) nochmals berechnet werden, wenn die der vorherigen Position (P1-P6) zugeordnete Partikelwolke (14) in einem Korrekturschritt geändert wurde.

14. Verfahren nach einem der Ansprüche 1 bis 13, bei dem die Umgebungsbilder 360°-Panoramabilder einer Kamera (10) sind.

15. Selbstfahrendes Bodenbearbeitungsgerät (1) mit einer Antriebseinheit (5), einer Steuereinrichtung (8) zur Steuerung der Antriebseinheit (5) und eine Vorrichtung zur Aufnahme von Bildern einer Umgebung des Bodenbearbeitungsgeräts (1), **dadurch gekennzeichnet, dass** das Bodenbearbeitungsgerät (1) zur Durchführung eines Verfahrens zur Positionsbestimmung nach einem der Ansprüche 1 bis 14 eingerichtet ist.

## Claims

1. Method for determining the position of a self-propelled floor treatment appliance (1) which comprises a drive unit (5), a control device (8) for controlling the drive unit (5) and an apparatus for capturing images of the surroundings of the floor treatment appliance (1), a current position (P) of the floor treatment appliance (1) being tracked in the form of a distribution of spatial probabilities, the method comprising the following steps:
- predicting a current position (P) of the floor treatment appliance (1) by further developing a distribution of the spatial probabilities that describes a previous position (P1-P6) of the floor treatment appliance (1);
- capturing a current image (B) of the surroundings;
**characterised by** the further steps of:
- comparing the current image (B) of the surroundings with at least one stored image (B1-B3) of the surroundings that was captured at a previous position (P1-P3) of the floor treatment appliance (1);
- correcting the distribution of the spatial probabilities that describes the current position (P) on the basis of a result of the comparison of the current image (B) of the surroundings with the at least one stored image (B1-B3) of the surroundings and
- storing the corrected distribution of the spatial probabilities and the current image (B) of the surroundings.

2. Method according to claim 1, wherein the position (P) of the floor treatment appliance (1) comprises orientation information (θ) in addition to location information (x, y).

3. Method according to claim 2, wherein the distribution of the spatial probabilities is represented by a particle cloud (14) which comprises a plurality of possible states (140) of the floor treatment appliance (1), each of which states contains position information which comprises location information (x, y) and orientation information (θ), and probability information (w).

4. Method according to any of claims 1 to 3, wherein the further development of a distribution of the spatial probabilities that describes a previous position (P1-P6) of the floor treatment appliance (1) is based on an odometric method.

5. Method according to claim 4, wherein the odometric method uses travel information of the appliance (1) that is provided by sensors (7).

6. Method according to any of claims 1 to 5, in which the current image (B) of the surroundings is compared with one or more stored images (B1-B3) of the surroundings, wherein direction vectors (16) are determined which indicate a direction under which the current position (P) at which the current image (B) of the surroundings was captured appears as viewed from the relevant position (P1-P3) at which the corresponding stored image (B1-B3) of the surroundings was captured.

7. Method according to claim 6, wherein one or more orientation differences are also determined by the image comparison, which orientation differences indicate a difference between a current orientation of the floor treatment appliance (1) and its orientation at the time of capturing a stored image (B1-B3) of the surroundings.

8. Method according to either claim 6 or claim 7, wherein the probability information (w) for the particles (140) of the particle cloud (14) are recalculated on the basis of the direction vectors (16) and/or the orientation differences.

9. Method according to claim 8, wherein, after the step of recalculating the probability information (w), particles 140 having a low value of the probability information (w) are removed from the particle cloud 14 and instead particles 140 having a higher value of the probability information (w) are multiplied.

10. Method according to any of claims 1 to 9, wherein the prediction step is carried out repeatedly before a current image (B) of the surroundings is captured.

11. Method according to any of claims 1 to 10, wherein the specified steps are carried out repeatedly while the appliance (1) is moving.

12. Method according to claim 10 and claim 11, wherein prediction steps are already carried out repeatedly while the steps of capturing the current image (B) of the surroundings, comparing and correcting are still being carried out.

13. Method according to claim 12, wherein previously carried out further developments of the particle cloud (14) which describes a previous position (P1-P6) of the floor treatment appliance (1) are recalculated if the particle cloud (14) associated with the previous position (P1-P6) has been changed in a correction step.

14. Method according to any of claims 1 to 13, wherein the images of the surroundings are 360° panoramic images from a camera (10).

15. Self-propelled floor treatment appliance (1) which comprises a drive unit (5), a control device (8) for controlling the drive unit (5) and an apparatus for capturing images of the surroundings of the floor treatment appliance (1), **characterised in that** the floor treatment appliance (1) is designed to carry out a method for determining the position according to any of claims 1 to 14.

## Revendications

1. Procédé permettant de détecter la position d'un appareil autonome de traitement de surface (1) qui présente une unité d'entraînement (5), un système de commande (8) destiné à commander l'unité d'entraînement (5), et un dispositif de prise d'images d'un environnement de l'appareil de traitement de surface (1), une position actuelle (P) de l'appareil de traitement de surface (1) étant suivie sous forme d'une distribution de probabilités de présence, comportant les étapes suivantes :
- prédiction d'une position actuelle (P) de l'appareil de traitement de surface (1) en développant une distribution des probabilités de présence décrivant une position précédente (P1-P6) de l'appareil de traitement de surface (1) ;
- prise d'une image actuelle (B) de l'environnement ;
**caractérisé par** les étapes supplémentaires ci-après :
- comparaison de l'image actuelle (B) de l'environnement avec au moins une image mémorisée (B1-B3) de l'environnement, qui a été prise à une position précédente (P1-P3) de l'appareil de traitement de surface (1) ;
- correction de la distribution des probabilités de présence décrivant la position actuelle (P) sur la base d'un résultat de la comparaison de l'image actuelle (B) de l'environnement avec ladite image mémorisée (B1-B3) de l'environnement ; et
- mémorisation de la distribution corrigée des probabilités de présence ainsi que de l'image actuelle (B) de l'environnement.

2. Procédé selon la revendication 1, dans lequel la position (P) de l'appareil de traitement de surface (1) comprend, en plus d'informations de localisation (x, y), des informations d'orientation (θ).

3. Procédé selon la revendication 2, dans lequel la distribution des probabilités de présence est indiquée par un nuage de particules (14) qui comprend une pluralité d'états possibles (140) de l'appareil de traitement de surface (1), chacun contenant des informations de position, qui comprennent des informations de localisation (x, y) et des informations d'orientation (θ), et des informations de probabilité (w).

4. Procédé selon l'une des revendications 1 à 3, dans lequel le développement d'une distribution des probabilités de présence décrivant une position précédente (P1-P6) de l'appareil de traitement de surface (1) est fondé sur un procédé odométrique.

5. Procédé selon la revendication 4, dans lequel le procédé odométrique utilise des informations de déplacement de l'appareil (1) qui sont fournies par des capteurs (7).

6. Procédé selon l'une des revendications 1 à 5, dans lequel l'image actuelle (B) de l'environnement est comparée à une ou plusieurs images mémorisées (B1-B3) de l'environnement, des vecteurs de direction (16) étant déterminés, lesquels indiquent une direction dans laquelle la position actuelle (P) à laquelle l'image actuelle (B) de l'environnement a été prise apparaît à partir de la position respective (P1-P3) à laquelle l'image mémorisée correspondante (B1-B3) de l'environnement a été prise.

7. Procédé selon la revendication 6, dans lequel une ou plusieurs différences d'orientation sont en outre déterminées par la comparaison d'images, lesquelles indiquent un écart entre une orientation actuelle de l'appareil de traitement de surface (1) et son orientation au moment de la prise d'une image mémorisée (B1-B3) de l'environnement.

8. Procédé selon la revendication 6 ou 7, dans lequel les informations de probabilité (w) pour les particules (140) du nuage de particules (14) sont recalculées sur la base des vecteurs de direction (16) et/ou des différences d'orientation.

9. Procédé selon la revendication 8, dans lequel, après l'étape de recalcul des informations de probabilité (w), les particules (140) comportant une faible valeur des informations de probabilité (w) sont retirées du nuage de particules (14), tandis que les particules (140) comportant une valeur plus élevée des informations de probabilité (w) sont multipliées.

10. Procédé selon l'une des revendications 1 à 9, dans lequel l'étape de prédiction est effectuée plusieurs fois avant la prise d'une image actuelle (B) de l'environnement.

11. Procédé selon l'une des revendications 1 à 10, dans lequel les étapes indiquées sont effectuées de manière répétée pendant un déplacement de l'appareil (1).

12. Procédé selon les revendications 10 et 11, dans lequel les étapes de prédiction sont déjà effectuées à maintes reprises, tandis que les étapes de prise de l'image actuelle (B) de l'environnement, de comparaison et de correction sont encore en cours.

13. Procédé selon la revendication 12, dans lequel des développements déjà effectués du nuage de particules (14) décrivant une position précédente (P1-P6) de l'appareil de traitement de surface (1) sont à nouveau calculés si le nuage de particules (14) associé à la position précédente (P1-P6) a été modifié au cours d'une étape de correction.

14. Procédé selon l'une des revendications 1 à 13, dans lequel les images de l'environnement sont des images panoramiques à 360° d'une caméra (10).

15. Appareil autonome de traitement de surface (1) comportant une unité d'entraînement (5), un système de commande (8) destiné à commander l'unité d'entraînement (5), et un dispositif de prise d'images d'un environnement de l'appareil de traitement de surface (1), **caractérisé en ce que** l'appareil de traitement de surface (1) est conçu pour exécuter un procédé de détection de position selon l'une des revendications 1 à 14.
